# EUROPÄISCHE PATENTANMELDUNG

(11) **EP 3 106 379 A1**
(43) Veröffentlichungstag der Anmeldung: **21.12.2016**
(21) Anmeldenummer: 15172889.6
(22) Anmeldetag: 19.06.2015
(51) Int. Cl.: B63H 21/30, B63H 23/32, H02K 5/24

(54) **SCHIFFSANTRIEB MIT KÖRPERSCHALLENTKOPPLUNG**

(71) Anmelder: Siemens Aktiengesellschaft, 80333 München (DE)
(72) Erfinder: Krabinski, Jeffrey, 12277 Berlin (DE); Hübner, Lutz, 14165 Berlin (DE); Jungiewicz, Artur, 13086 Berlin (DE)

(57) **Zusammenfassung**

Die Erfindung betrifft einen Schiffsantrieb (1) aufweisend einen Aktivteil (2), einen Passivteil (3) und einen um eine horizontale Rotationsachse (6) rotierenden Teil (4). Um für den Schiffsantrieb (1) mit einer Körperschallentkopplung, im Vergleich zum Stand der Technik, einen geringeren Platzbedarf, ein geringeres Gewicht und eine bessere Kostenposition zu erreichen, wird vorgeschlagen, dass der Aktivteil (2) über ein elastisches Zwischenelement (5) direkt mit einem Schiffsrumpf (9) verbindbar ist, wobei der rotierende Teil (4) über Lager (8) mit dem Passivteil (3) verbunden ist, wobei der Passivteil (3) starr mit dem Schiffsrumpf (9) verbindbar ist und wobei das elastische Zwischenelement (5) zur Körperschallentkopplung vorgesehen ist.

## Beschreibung

Die Erfindung betrifft einen Schiffsantrieb aufweisend einen Aktivteil, einen Passivteil und einen um eine horizontale Rotationsachse rotierenden Teil.

Weiterhin betrifft die Erfindung ein Schiff oder Unterseeboot, welches einen Schiffsrumpf und mindestens einen derartigen Schiffsantrieb aufweist.

Im Schiffsbau, besonders bei modernen Kreuzfahrtschiffen, werden zunehmend Kombinationen aus großen Elektromotoren und entsprechend leistungsfähigen Umrichtern eingesetzt um Schiffsschrauben drehzahlgeregelt anzutreiben. Die eingesetzten elektrischen Maschinen erreichen typischerweise Leistungen zwischen 5 MW und 25 MW. Solche von Umrichtern gespeisten elektrischen Antriebe verursachen teils erhebliche dynamische Kräfte an den Motoren durch sogenannte Momentenpendelungen oder andere magnetische Luftspaltanregungen. Die magnetischen Anregungen der elektrischen Antriebe liegen dabei in der Regel im Bereich zwischen etwa 120 Hz bis 1 kHz. Damit die hörbaren Anteile als Körperschall nicht über die Schiffsstruktur in die Kabinen der Passagiere gelangen, werden die elektrischen Antriebe elastisch auf den zugehörigen Fundamenten im Schiffsrumpf aufgestellt.

Elastische Aufstellungen im Allgemeinen gehören zum Stand der Technik, wobei frühere Lösungen hauptsächlich zum Schutz des Gehäuses vor hohen mechanischen Beanspruchungen, wie sie beispielsweise bei einem Einphasen-Generator auftreten, angewendet worden sind. Der Schutz vor niederfrequenten Schwingungen (typisch < 50 Hz) erfordert wesentlich weichere Federelemente als sie zur Filterung von Körperschall (ab 120 Hz bis 1 kHz) notwendig sind.

Aus dem deutschen Patent DE 196 33 421 B4 ist eine Schiffsantriebsanlage bekannt, bei der der Antriebsmotor unter Verwendung von schwingungsdämpfenden Elementen auf einem Tragrahmen angeordnet ist.

Der Erfindung liegt die Aufgabe zugrunde, einen Schiffsantrieb mit einer Körperschallentkopplung anzugeben, welcher, im Vergleich zum Stand der Technik, platzsparender, gewichtssparender und kostengünstiger ausgebildet ist.

Die Aufgabe wird durch einen Schiffsantrieb aufweisend einen Aktivteil, einen Passivteil und einen um eine horizontale Rotationsachse rotierenden Teil gelöst, wobei der Aktivteil über ein elastisches Zwischenelement direkt mit einem Schiffsrumpf verbindbar ist, wobei der rotierende Teil über Lager mit dem Passivteil verbunden ist, wobei der Passivteil starr mit dem Schiffsrumpf verbindbar ist und wobei das elastische Zwischenelement zur Körperschallentkopplung vorgesehen ist.

Die Aufgabe wird weiterhin durch ein Schiff oder Unterseeboot, welches einen Schiffsrumpf und mindestens einen derartigen Schiffsantrieb aufweist, gelöst.

Durch die Rotationsachse des rotierenden Teils werden eine Umfangsrichtung, eine radiale Richtung und eine axiale Richtung definiert. Die modulare Aufteilung der Komponenten, also des Aktivteils, des Passivteils und des rotierenden Teils, und die damit einhergehende separate elastische Lagerung des Aktivteils, bieten den Vorteil, dass die Lager, welche vorzugsweise als Gleitlager ausgeführt sind, und somit auch die Welle keine übermäßig großen Schwingbewegungen ausführen können. Die Notwendigkeit einer hochflexiblen Kupplung entfällt damit. Durch den Wegfall einer Tragstruktur, beispielsweise eines Grundrahmens ist der Aktivteil direkt über das elastische Zwischenelement mit dem Schiffsrumpf, welcher auch einem Schiffsfundament entspricht, verbunden. Eine kostenintensive Schweißkonstruktion, welche eine Tragstruktur bildet, fällt daher weg. Daraus resultieren eine Reduzierung der Kosten, der Fertigungszeit und der Bauhöhe des Schiffsantriebs. Weiterhin wird durch die oben beschriebene modulare Aufteilung der Komponenten die elastisch zu lagernde Masse deutlich gesenkt, sodass beispielsweise weniger, kleinere und somit günstigere elastische Auflagerelemente verbaut werden können.

Weiterhin ist das elastische Zwischenelement durch den Wegfall einer Tragstruktur leicht zugänglich und ermöglicht eine einfachere Wartung.

Bei einer bevorzugten Ausführungsform sind die Lager als hydrostatische oder hydrodynamische Lager ausgeführt und dafür vorgesehen, Schwingungen, welche im rotierenden Teil entstehen, zu dämpfen. Bedingt durch die hohen Dämpfungskennwerte hydrostatischer oder hydrodynamischer Lager werden etwaig entstehende störende Schwingungen über den Läufer in die starr montierten Lagerständer und somit in das Schiffsfundament stark abgeschwächt.

In besonders vorteilhafter Weise weist das elastische Zwischenelement mindestens zwei Federn auf, welche dafür vorgesehen sind, den Aktivteil mit dem Schiffsrumpf zu verbinden. Die Federn können vorzugsweise aus Federstahl aber auch aus einem anderen Material bestehen. Derartige Federelemente gewährleisten eine wirksame schwingungstechnische Entkopplung des Aktivteils und des Schiffsrumpfs. Dadurch lassen sich beispielsweise Geräuschbelästigungen in den Passagierkabinen von Kreuzfahrtschiffen unterhalb eines erträglichen Levels halten. Die mindestens zwei Federn können in verschiedener Weise an die jeweiligen Gegebenheiten angepasst werden. So können beispielsweise die Anzahl, die Art der Federn, die Verteilung innerhalb des elastischen Zwischenelements, die einzelnen Federhärten sowie die Geometrie variiert werden, um eine möglichst platzsparende, gewichtssparende und kostengünstige schwingungstechnische Entkopplung zu erreichen. Da bei Federelementen eine genaue Bestimmung der Federwerte möglich ist, kann das elastische Zwischenelement mit einem vertretbaren Aufwand definiert abgestimmt werden.

Bei einer weiteren vorteilhaften Ausgestaltung weist das elastische Zwischenelement ein elastisches Material auf, welches dafür vorgesehen ist, den Aktivteil mit dem Schiffsrumpf zu verbinden. Als elastisches Material werden vorzugsweise Gummi oder andere federelastische Kunststoffe aufweisende Elemente verwendet. Das elastische Material nimmt, genau wie eine Feder, etwaig entstehende störende Schwingungen vom Aktivteil auf und dämpft diese wodurch eine wirksame schwingungstechnische Entkopplung des Aktivteils und des Schiffsrumpfs gewährleistet ist. Dies ist besonders vorteilhaft, da ein derartiges Material kostengünstig und platzsparend ist. Weiterhin kann das elastische Zwischenelement sowohl ein elastische Material als auch Federn aufweisen.

In besonders vorteilhafter Weise weist der rotierende Teil einen Rotor und eine Welle auf, wobei der Rotor drehfest mit der Welle verbunden ist. Der Rotor kann beispielsweise bei einer Synchronmaschine Polspulen oder Permanentmagnete aufweisen. Die Welle, an welcher der Rotor drehfest verbunden ist, ist über Lager mit dem Passivteil verbunden, wobei der Passivteil starr mit dem Schiffsrumpf verbunden ist. Durch diese oben beschriebene modulare Aufteilung der Komponenten wird die elastisch zu lagernde Masse deutlich gesenkt. Dadurch werden Platz, Gewicht und Kosten eingespart.

Vorteilhaft weist der Aktivteil einen den rotierenden Teil umgebenden Stator und ein den Stator umgebendes Gehäuse auf, wobei das Gehäuse mit dem elastischen Zwischenelement verbunden ist. Die separate elastische Lagerung des Stators mit dem Gehäuse bietet den Vorteil, dass die elastisch zu lagernde Masse deutlich gesenkt wird. Dadurch wird eine platzsparende, gewichtssparende und kostengünstige schwingungstechnische Entkopplung erreicht.

In einer bevorzugten Ausführungsform weist der Aktivteil einen den rotierenden Teil umgebenden Stator auf, wobei der Stator als Gehäuse ausgeführt ist und wobei der Stator mit dem elastischen Zwischenelement verbunden ist. Durch eine derartige Ausgestaltung wird ein zusätzliches Gehäuse für den Aktivteil eingespart, was zu einer Reduzierung des Platzbedarfs, des Gewichts und der Kosten führt.

Bei einer weiteren vorteilhaften Ausgestaltung ist das elastische Zwischenelement derartig ausgeführt, dass der Aktivteil dafür vorgesehen ist, sich bei einer, insbesondere durch einen Kurzschluss verursachte, Drehmomentänderung, in Umfangsrichtung zu bewegen. Dies wird beispielsweise dadurch erreicht, dass das elastische Zwischenelement in radialer Richtung und/oder in axialer Richtung eine andere Steifigkeit als in Umfangsrichtung aufweist, wodurch sich für eine durch eine Drehmomentänderung verursachte Bewegung des Aktivteils eine Vorzugsrichtung ergibt. Dies ist besonders vorteilhaft, da auf diese Weise eine Änderung der Größe des Luftspalts aufgrund einer Drehmomentänderung zumindest minimiert wird.

Bei einer bevorzugten Ausführungsform ist das elastische Zwischenelement dafür vorgesehen den Körperschall, welcher von mindestens einer Anregungsfrequenz, insbesondere von einem Umrichter, erzeugt wird, selektiv zu dämpfen. Dieses frequenzselektive Verhalten kann beispielsweise durch eine Anordnung von unterschiedlichen Federn und/oder durch eine Kombination aus Federn und einem elastische Material erreicht werden. Durch eine derartige Ausführungsform wird eine zuverlässige schwingungstechnische Entkopplung im gewünschten Frequenzbereich erreicht.

Im Folgenden wird die Erfindung anhand der in den Figuren dargestellten Ausführungsbeispiele näher beschrieben und erläutert.

Es zeigen:
- FIG 1: einen Querschnitt eines Schiffsantriebs mit einem elastischen Zwischenelement, welches ein elastisches Material aufweist,
- FIG 2: einen Längsschnitt eines Schiffsantriebs mit einem elastischen Zwischenelement, welches Federn aufweist,
- FIG 3: einen Querschnitt eines Schiffsantriebs,
- FIG 4: einen Querschnitt eines Schiffsantriebs, wobei der Stator als Gehäuse ausgeführt ist und
- FIG 5: einen Längsschnitt eines Schiffs mit einem Schiffsantrieb.

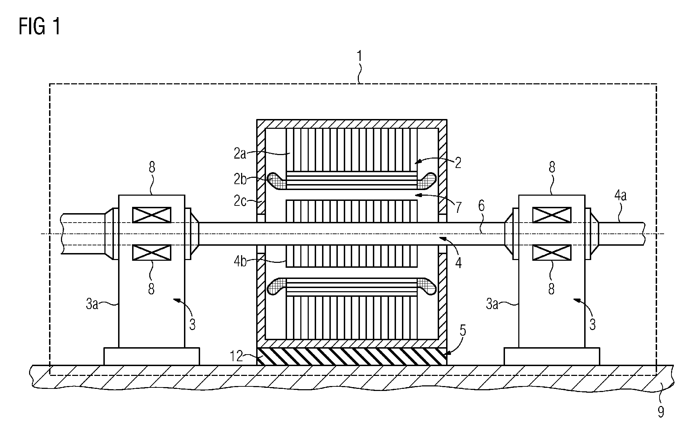

FIG 1 zeigt einen Längsschnitt eines Schiffsantriebs 1 mit einem elastischen Zwischenelement 5, welches ein elastisches Material 12 aufweist. Der Schiffsantrieb 1 weist einen Aktivteil 2 auf, welcher wiederum einen Stator 2a mit Statorwickelköpfen 2b und ein den Stator 2a umgebendes Gehäuse 2c aufweist. Weiterhin weist der Schiffsantrieb 1 einen Passivteil 3, welcher einen Lagerständer 3a aufweist, und einen um eine horizontale Rotationsachse 6 rotierenden Teil 4, welcher eine Welle 4a und einen drehfest mit der Welle 4a verbundenen Rotor 4b aufweist, auf. Der rotierende Teil 4 ist über Lager 8 mit dem Passivteil 3 verbunden. Die Lager 8 sind als hydrostatische oder hydrodynamische Lager 8 ausgeführt. Bedingt durch die hohen Dämpfungskennwerte hydrostatischer und hydrodynamischer Lager 8 werden etwaig entstehende störende Schwingungen über den Rotor 4b in die starr montierten Lagerständer 3a und somit in das Schiffsfundament 9 stark abgeschwächt. Während der Passivteil 3 starr und direkt mit dem Schiffsrumpf 9 verbunden ist, ist der Aktivteil 2 über ein elastisches Zwischenelement 5 mit dem Schiffsrumpf 9 verbunden. Das elastische Zwischenelement 5 dient der Körperschallentkopplung. Dadurch lassen sich beispielsweise Geräuschbelästigungen in den Passagierkabinen von Kreuzfahrtschiffen unterhalb eines erträglichen Levels halten. In der in FIG 1 dargestellten Ausgestaltung besteht das elastische Zwischenelement 5 aus mindestens einem elastischen Material 12, beispielsweise Gummi oder einen anderen federelastischen Kunststoff. Das elastische Material 12 nimmt etwaig entstehende störende Schwingungen, welche beispielsweise vom Stator 2a oder von einem Umrichter erzeugt werden, auf und dämpft diese wodurch eine schwingungstechnische Entkopplung des Aktivteils 2 und des Schiffsrumpfs 9 gewährleistet ist. Um weiteren Platz und weitere Kosten zu sparen, kann der Stator 2a alternativ als Gehäuse 2c ausgeführt und direkt über ein elastisches Zwischenelement 5 mit dem Schiffsrumpf 9 verbunden sein.

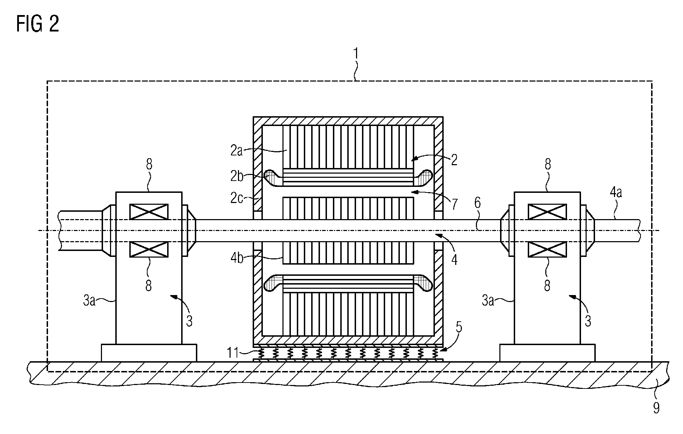

FIG 2 zeigt einen Längsschnitt eines Schiffsantriebs 1 mit einem elastischen Zwischenelement 5, welches Federn 11 aufweist. Bis auf die Ausgestaltung des elastischen Zwischenelements 5 entspricht die Ausführung des Schiffsantriebs 1 der aus FIG 1. Das elastische Zwischenelement 5 in FIG 2 besteht aus mehreren Federn 11, welche das Gehäuse 2c des Aktivteils 2 mit dem Schiffsrumpf 9 verbinden. Die Federn 11 sind vorzugsweise aus Federstahl gefertigt, können aber auch aus einem anderen Material bestehen. Auch derartige Federn 11 gewährleisten eine schwingungstechnische Entkopplung des Aktivteils 2 und des Schiffsrumpfs 9, wodurch sich etwaige Geräuschbelästigungen, beispielsweise in den Passagierkabinen von Kreuzfahrtschiffen, unterhalb eines erträglichen Levels halten lassen. Die Federn 11 können auf verschiedene Weise an die jeweiligen Gegebenheiten angepasst werden. So können die Anzahl, die Art der Federn 11, die Verteilung innerhalb des elastischen Zwischenelements 5, die einzelnen Federhärten sowie die Geometrie variiert werden, um eine möglichst platzsparende, gewichtssparende und kostengünstige schwingungstechnische Entkopplung zu erreichen. Da bei den Federn 11 eine genaue Bestimmung der Federwerte möglich ist, kann das elastische Zwischenelement 5 mit einem vertretbaren Aufwand definiert abgestimmt werden. Weiterhin kann das elastische Zwischenelement 5 sowohl ein elastische Material 12, wie es in FIG 1 gezeigt ist, als auch Federn 11, wie sie in FIG 2 gezeigt sind, aufweisen. Mit Hilfe einer Kombination aus Federn 11 und/oder elastischen Materialien 12, kann Körperschall, welcher von mindestens einer Anregungsfrequenz, beispielsweise von den Schaltfrequenzen eines Umrichters, erzeugt wird, selektiv gedämpft werden.

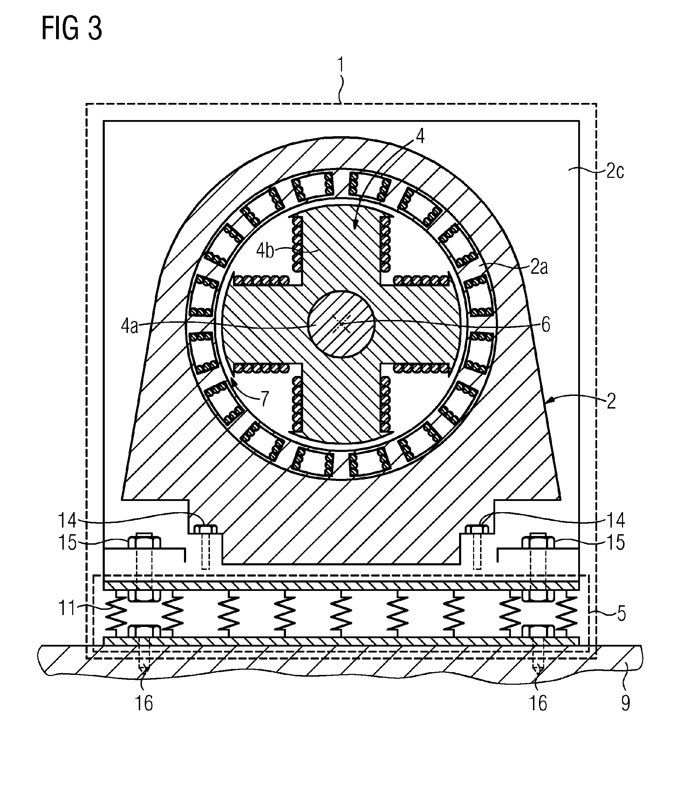

FIG 3 zeigt einen Querschnitt eines Schiffsantriebs 1. Die Ausführung des Schiffsantriebs 1 entspricht der aus FIG 2, wobei der Schiffsantriebs 1 zur Körperschallentkopplung ein elastisches Zwischenelement 5 mit Federn 11 aufweist. In der in FIG 3 gezeigten Ausgestaltung des Aktivteils 2 ist der Stator 2a mit dem Gehäuse 2c über Statorschrauben 14 verschraubt. Weiterhin ist das Gehäuse 2c des Aktivteils 2 über Gehäuseschrauben 15 mit dem Federn 11 aufweisenden elastischen Zwischenelement 5 verbunden. Das elastische Zwischenelement 5 ist über Schiffsrumpfschrauben 16 mit dem Schiffsrumpf 9 verbunden.

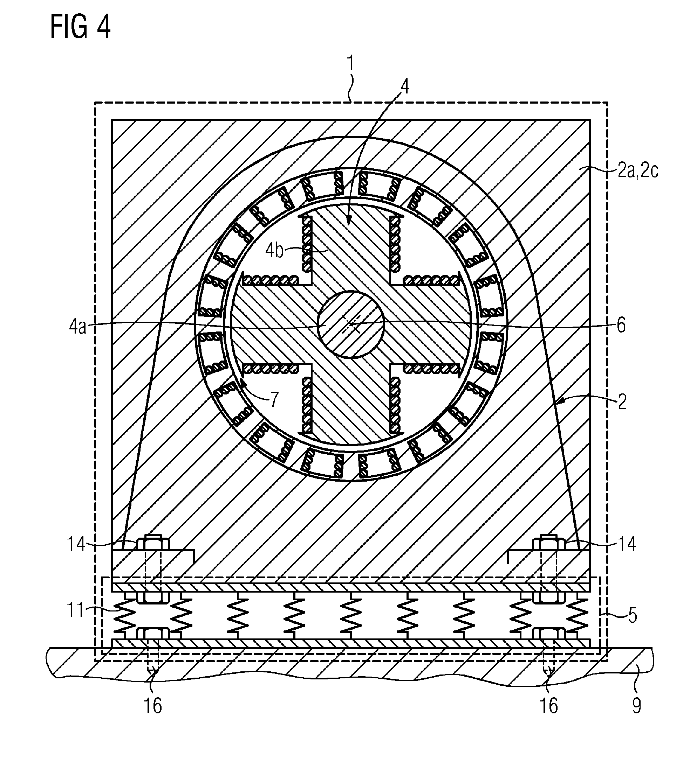

FIG 4 zeigt einen Querschnitt eines Schiffsantriebs 1, wobei der Stator 2a als Gehäuse 2c ausgeführt ist. Daher ist kein weiteres Gehäuse 2c wie in FIG 3 für den Schiffsantrieb 1 erforderlich. Die Ausführung des Schiffsantriebs 1 entspricht ebenfalls der aus FIG 2, wobei der Schiffsantriebs 1 zur Körperschallentkopplung ein elastisches Zwischenelement 5 mit Federn 11 aufweist. Im der in FIG 4 gezeigten Ausgestaltung des Aktivteils 2 ist der als Gehäuse 2c ausgeführte Stator 2a über Gehäuseschrauben 15 direkt mit dem Federn 11 aufweisenden elastischen Zwischenelement 5 verbunden. Das elastische Zwischenelement 5 ist über Schiffsrumpfschrauben 16 mit dem Schiffsrumpf 9 verbunden. Durch eine derartige Ausgestaltung wird ein zusätzliches Gehäuse 2c für den Aktivteil 2 eingespart, was zu einer Reduzierung des Platzbedarfs, des Gewichts und der Kosten führt.

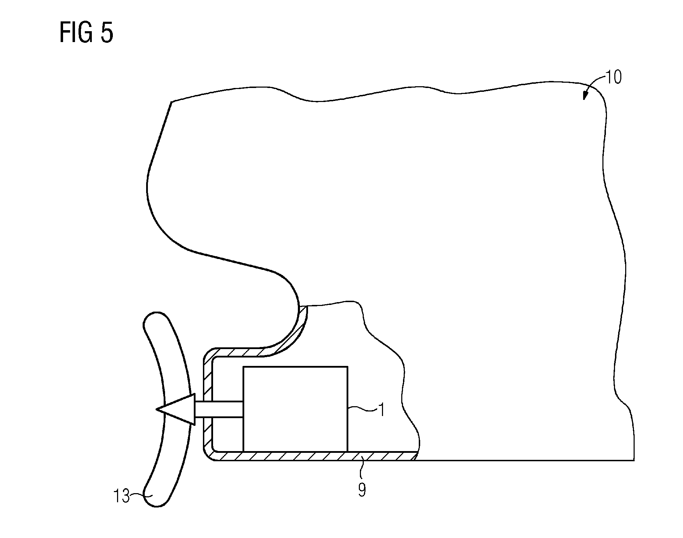

FIG 5 zeigt einen Querschnitt eines Schiffs 10 mit einem Schiffsantrieb 1. Der Schiffsantrieb 1 ist wie in einer der in FIG 1 bis FIG 4 beschriebenen Ausgestaltungen ausgeführt und ist direkt mit dem Schiffsrumpf 9 verbunden. Weiterhin ist eine Schiffsschraube 13 in dieser beispielhaften Ausführungsform direkt mit der Welle 4a des Schiffsantriebs 1 verbunden, wobei die Schiffsschraube 13 direkt vom Schiffsantrieb 1 angetrieben wird.

Zusammenfassend betrifft die Erfindung einen Schiffsantrieb 1 aufweisend einen Aktivteil 2, einen Passivteil 3 und einen um eine horizontale Rotationsachse 6 rotierenden Teil 4. Um für den Schiffsantrieb 1 mit einer Körperschallentkopplung, im Vergleich zum Stand der Technik, einen geringeren Platzbedarf, ein geringeres Gewicht und eine bessere Kostenposition zu erreichen, wird vorgeschlagen, dass der Aktivteil 2 über ein elastisches Zwischenelement 5 direkt mit einem Schiffsrumpf 9 verbindbar ist, wobei der rotierende Teil 4 über Lager 8 mit dem Passivteil 3 verbunden ist, wobei der Passivteil 3 starr mit dem Schiffsrumpf 9 verbindbar ist und wobei das elastische Zwischenelement 5 zur Körperschallentkopplung vorgesehen ist.

## Patentansprüche

1. Schiffsantrieb (1) aufweisend einen Aktivteil (2), einen Passivteil (3) und einen um eine horizontale Rotationsachse (6) rotierenden Teil (4),
wobei der Aktivteil (2) über ein elastisches Zwischenelement (5) direkt mit einem Schiffsrumpf (9) verbindbar ist,
wobei der rotierende Teil (4) über Lager (8) mit dem Passivteil (3) verbunden ist,
wobei der Passivteil (3) starr mit dem Schiffsrumpf (9) verbindbar ist und
wobei das elastische Zwischenelement (5) zur Körperschallentkopplung vorgesehen ist.

2. Schiffsantrieb (1) nach Anspruch 1,
wobei die Lager (8) als hydrostatische oder hydrodynamische Lager ausgeführt sind und dafür vorgesehen sind, Schwingungen, welche im rotierenden Teil (4) entstehen, zu dämpfen.

3. Schiffsantrieb (1) nach einem der Ansprüche 1 oder 2, wobei das elastische Zwischenelement (5) mindestens zwei Federn (11) aufweist, welche dafür vorgesehen sind, den Aktivteil (2) mit dem Schiffsrumpf (9) zu verbinden.

4. Schiffsantrieb (1) nach einem der Ansprüche 1 bis 3, wobei das elastische Zwischenelement (5) ein elastisches Material (12) aufweist, welches dafür vorgesehen ist, den Aktivteil (2) mit dem Schiffsrumpf (9) zu verbinden.

5. Schiffsantrieb (1) nach einem der Ansprüche 1 bis 4, wobei der rotierende Teil (4) einen Rotor (4b) und eine Welle (4a) aufweist, wobei der Rotor (4b) drehfest mit der Welle (4a) verbunden ist.

6. Schiffsantrieb (1) nach einem der Ansprüche 1 bis 5, wobei der Aktivteil (2) einen den rotierenden Teil (4) umgebenden Stator (2a) und ein den Stator (2a) umgebendes Gehäuse (2c) aufweist, wobei das Gehäuse (2c) mit dem elastischen Zwischenelement (5) verbunden ist.

7. Schiffsantrieb (1) nach einem der Ansprüche 1 bis 5, wobei der Aktivteil einen den rotierenden Teil (4) umgebenden Stator (2a) aufweist, wobei der Stator (2a) als Gehäuse (2c) ausgeführt ist und wobei der Stator (2a) mit dem elastischen Zwischenelement (5) verbunden ist.

8. Schiffsantrieb (1) nach einem der Ansprüche 1 bis 7, wobei das elastische Zwischenelement (5) derartig ausgeführt ist, dass der Aktivteil (2) dafür vorgesehen ist, sich bei einer, insbesondere durch einen Kurzschluss verursachte, Drehmomentänderung, in Umfangsrichtung zu bewegen.

9. Schiffsantrieb (1) nach einem der Ansprüche 1 bis 8, wobei das elastische Zwischenelement (5) dafür vorgesehen ist den Körperschall, welcher von mindestens einer Anregungsfrequenz, insbesondere von einem Umrichter, erzeugt wird, selektiv zu dämpfen.

10. Schiff (10) oder Unterseeboot, welches einen Schiffsrumpf (9) und mindestens einen Schiffsantrieb (1) nach einem der Ansprüche 1 bis 9 aufweist.
